# EUROPÄISCHE PATENTSCHRIFT

(11) **EP 0 363 621 B1**
(45) Veröffentlichungstag und Bekanntmachung des Hinweises auf die Patenterteilung: **28.12.1994**
(21) Anmeldenummer: 89116047.5
(22) Anmeldetag: 31.08.1989
(51) Int. Cl.: G21F 9/28, G21C 19/375, B30B 11/02

(54) **Presse zum Verdichten von länglicher radioaktiven Strukturteilen und Verfahren zu ihrem Betrieb**
Press for compacting elongate radioactive components and method for operating same
Presse pour compacter des éléments radioactifs de structure oblongue et procédé pour son utilisation

(30) Priorität: 08.10.1988 DE 3834269
(43) Veröffentlichungstag der Anmeldung: 18.04.1990
(73) Patentinhaber: Brennelementlager Gorleben GmbH, D-29475 Gorleben (DE)
(72) Erfinder: Bierwirth, Helmut, D-3500 Kassel (DE); König, Thomas, D-3500 Kassel (DE); Schulte, Burkhardt, D-4950 Minden (DE)
(74) Vertreter: Albrecht, Rainer Harald, Dr.-Ing.

(56) Entgegenhaltungen:
- EP-A- 0 113 448
- DE-A- 2 162 938
- DE-A- 3 319 698
- DE-A- 3 802 966
- FR-A- 2 525 019
- GB-A- 1 406 385

## Beschreibung

Die Erfindung betrifft eine Presse nach dem Oberbegriff des Anspruchs 1.

Eine derartige Presse wird in der deutschen Offenlegungsschrift 38 02 966 vorgeschlagen. Der Preßstempel wird von einem langen Hydraulikzylinder angetrieben. Mit dem Preßstempel wird ein Brennelementskelett gegen den Boden des Preßschachtes in Längsrichtung zusammengepreßt. Nach dem Verpressen wird der Preßling in einen Übergabeschacht geschoben und mit diesem aus der Presse abtransportiert. Der Übergabeschacht umschließt den Preßling, so daß gebrochene Skelettstücke gesichert bleiben und eine Volumenexpansion in radialer Richtung durch eine Entspannung des Preßlings verhindert wird. Die erreichte Maßhaltigkeit des Preßlings ist vorteilhaft für die weiteren Verfahrensschritte.

Diese an sich bewährte Presse weist wegen des notwendigen langen Hydraulikzylinders eine große Baulänge auf, was auch die Fernhantierbarkeit erschwert. Weiter wurde festgestellt, daß gegen Ende des Preßvorganges kleinere Partikel aus den montagenotwendigen Spalten zwischen der Preßkastenstirnseite und der Stirnfläche des Gegenstempels aus dem Pressenkanal heraustreten können. Aufgrund der Rückfederung des Preßlings nach Abschluß des Preßvorganges kann dieser in axialer Richtung auffedern und das Herausziehen des Gegenstempels behindern.

In der deutschen Offenlegungsschrift 34 44 570 wird eine Vorrichtung vorgeschlagen, mit der längliche radioaktive Teile gleicher Geometrie in Stücke geschnitten und anschließend in einen Behälter eingeführt werden. Dabei entspricht die Länge dieser Stücke etwa der Höhe des Behälters.

Mit einer Packungseinrichtung werden bereits im Behälter befindliche Teile zur Seite gedrückt, um so Platz für weitere Teile zu schaffen. Diese Vorrichtung ist auf Teile einer ganz bestimmten Geometrie ausgerichtet; sie ist nicht dazu geeignet, längliche radioaktive Teile unterschiedlicher Geometrie, wie z. B. unzerlegte Brennelementskelette, zu kompaktieren.

Ferner wird in der deutschen Offenlegungsschrift 33 00 359 eine Austragsvorrichtung für kompaktierbare Substanzen vorgeschlagen, bei der stückiges oder körniges Material in einem Stauchraum zu Pfropfen verdichtet wird. Dabei ist der Verdichtungsgrad durch Veränderung der Gegenhaltekraft des den Stauchraum verschließenden Stopfens einstellbar. Die Anwendung dieser Austragsvorrichtung ist jedoch auf schüttfähige Substanzen beschränkt.

Von daher liegt der Erfindung die Aufgabe zugrunde, eine Presse der eingangs genannten Art so zu gestalten, daß sie eine geringere Baulänge aufweist, dabei weitgehend fernhantierbar ist und während des Preßvorgangs sowie beim Einschieben des Preßlings in den Übergabeschacht keine kleinen Partikel aus dem Pressenkanal heraustreten können, wobei noch sichergestellt sein soll, daß die unvermeidliche Auffederung des Preßlings in axialer Richtung ohne Einfluß auf das Herausheben des Gegenstempels und das Einlegen des Übergabeschachtes ist.

Diese Aufgabe wird bei einer gattungsgemäßen Presse durch die kennzeichnenden Merkmale des Anspruchs 1 gelöst.

Die mit der Erfindung erzielten Vorteile bestehen in der kurzen Baulänge der Presse, der guten Fernhantierbarkeit und handlichen Entsorgbarkeit der Bauteile und des infolge der Längsverschiebbarkeit des Pressenschachts bzw. Pressenkanals und der Gestaltung des Gegenstempels erreichten, von Partikelaustritt freien Preßvorgangs und der zwangfreien Einlege- und Heraushebevorgänge für den Gegenstempel und für den Übergabeschacht.

Zur Vergrößerung der Benutzungsdauer der Presse ist in Ausgestaltung der Erfindung vorgesehen, daß der Pressenschacht mit einem Auswechselbaren U-förmigen, nach oben offenen Verschleißeinsatz versehen ist und daß zur besseren Fernhantierbarkeit der U-förmige Verschließeinsatz des Pressenschachts aus mehreren in Preßrichtung hintereinander angeordneten Verschleißeinsatzabschnitten besteht, von denen der in Preßrichtung letzte Verschließeinsatzabschnitt mittels Anschlagleisten formschlüssig mit dem Pressenschacht verbunden ist und der in Preßrichtung erste Verschließeinsatzabschnitt vor einem fernhantierbaren Verschiebeantrieb eingesetzt ist, mit dem alle Verschleißeinsatzabschnitte untereinander fugenlos und der letzte Verschleißeinsatzabschnitt gegen die Anschlagleisten an Boden und Seitenwänden des Pressenschachts zur Anlage gebracht werden.

Zur Vergrößerung der Benutzungsdauer ist außerdem in Ausgestaltung der Erfindung vorgesehen, daß die zum Pressenschacht gerichteten Flächen der Abschnitte des Deckels mit Verschleißplatten versehen sind. Dabei ist der in Preßrichtung letzte Abschnitt des Deckels mit der Verschleißplatte durch Anschlagleisten formschlüssig verbunden und der in Preßrichtung erste Deckelabschnitt vor einem fernhantierbaren Verschiebantreib eingesetzt , mit dem vor dem Einschwenken und Anziehen der Deckelschrauben alle Deckelabschnitte untereinander fugenlos und der letzte Abschnitt gegen die Auflagefläche der Anschläge am Pressenschacht zur Anlage gebracht werden. Dadurch wird verhindert, daß sich zwischen den Abschnitten Partikel einklemmen, die zu verstärktem Verschleiß an den Preßstempeln führen können.

Um mit geringem Zeitaufwand ein Schließen und Öffnen der Deckelabschnitte vornehmen zu können und um zum Einlegen von kürzeren Bereits vorzerkleinerten Brennelementskeletten oder anderen Strukturteilen, nicht den vollständigen Deckel öffnen zu müssen, ist in weiterer Ausgestaltung der Erfindung vorgesehen, daß die Deckelabschnitte unabhängig voneinander mit paarweise in Traversen schwenkbar befestigten, außen an den Seitenwänden des Pressenschachtes in Nuten formschlüssig eingreifenden hakenförmigen Deckelschrauben gegen die Oberseite des Pressenschachts gespannt werden und die Deckelschrauben fernhantiert paarweise in Eingriffstellung geschwenkt und anschließend mit Spannmuttern angezogen werden.

Um die Baulänge der Presse möglichst kurz zu halten und um den in Abschnitte unterteilten Pressenstempel aus der vordersten Stellung sicher zurückziehen zu können, ist in weiterer Ausgestaltung der Erfindung vorgesehen, daß zwischen den an der Kolbenstage des Pressenzylinders lösbar befestigten Zylinderstempel und dem am zu verdichtenden Material anliegenden Führungsstempel ein oder mehrere Verlängerungsstempel einsetzbar und durch in entsprechende Aussparungen einlegbare Formstücke formschlüssig miteinander verbindbar sind.

Um ein automatisches Zusammenkuppeln der verschiedenen Pressenstempel zu erreichen, ist schließlich noch vorgesehen, daß die Formstücke an ihrem zum Pressenzylinder weisenden Ende beidseitig mit quer zur Preßrichtung liegenden Schwenkzapfen versehen sind und an der Unterseite des gegenüberliegenden in Preßrichtung weisenden Endes einen hakenförmigen Vorsprung aufweisen, der mit einer geneigten Anlauffläche versehen ist und daß die Formstücke in entsprechende Aussparungen an der Oberseite der Verlängerungsstempel und des Führungsstempels formschlüssig eingreifen.

Die Unterteilung von Deckel und Pressenstempel hat zudem den Vorteil, daß zum Verdichten von kurzen Strukturteilen, die nicht die Länge der Brennelementskelette aufweisen, der Deckel nur teilweise geöffnet werden muß und der mit einer größeren Anzahl von Schrauben befestigte Deckelabschnitt im Hochverdichtungsbereich geschlossen bleiben kann.

Ein Ausführungsbeispiel der Erfindung ist in der Zeichnung dargestellt und wird im folgenden näher beschrieben.

Es zeigen
- Fig. 1: den vertikalen Längsschnitt einer Presse mit eingelegten Verlängerungsstempeln, eingelegtem Gegenstempel und einem teilverdichteten Preßling,
- Fig. 2: die Ansicht in Richtung A gem. Fig. 1 (Draufsicht) mit teilweise entfernten Deckelabschnitten
- Fig. 3: eine Teildarstellung des vertikalen Längsschnittes einer Presse gem. Fig. 1 mit Gegenstempel, hochverdichtetem Preßling und zurückgezogenen Pressenschacht,
- Fig. 4: eine Teildarstellung wie Fig. 3 mit eingelegten Übergabeschacht, und darin eingeschobenen hochverdichteten Preßling,
- Fig. 5: eine Teildarstellung wie Fig. 4 mit zurückgezogenem Pressenschacht und zurückgezogenem Preßstempel,
- Fig. 6: einen Schnitt durch die Presse in Richtung B - B′ gem. Fig. 1,
- Fig. 7: eine Teildarstellung des Pressenschachts am zylinderseitigen Ende entsprechend der Einzelheit C gem. Fig. 1,
- Fig. 8: einen Schnitt durch den Pressenschacht in Richtung D - D′ gem. Fig. 1
- Fig. 9: eine senkrechte Ansicht der Verbindung von zwei Preßstempelabschnitten im Bereich E gem. Fig. 1 in getrennter Position,
- Fig. 10: eine Ansicht in Richtung F gem. Fig. 9

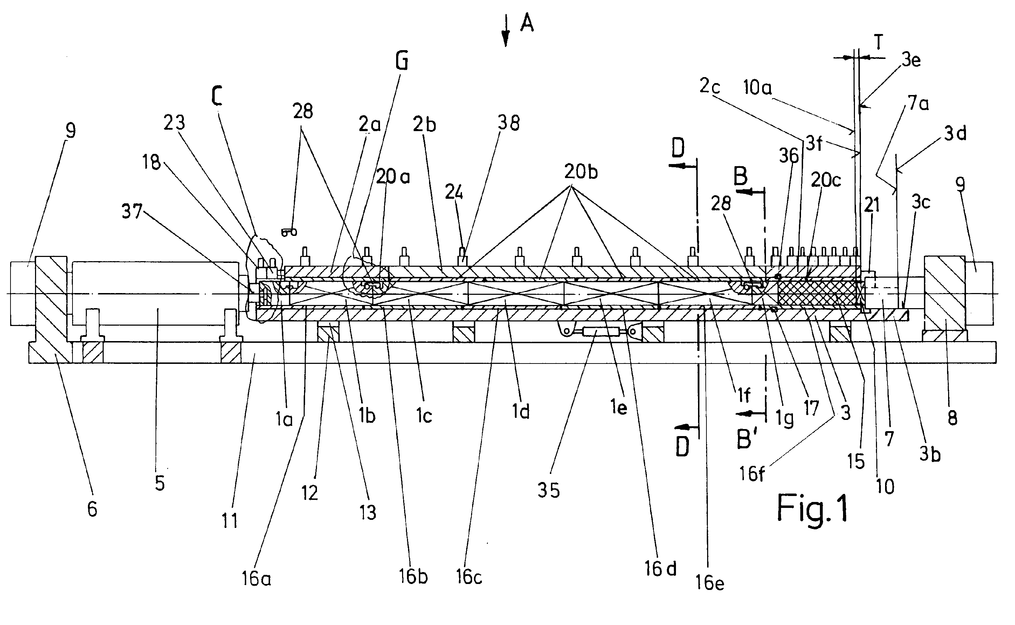

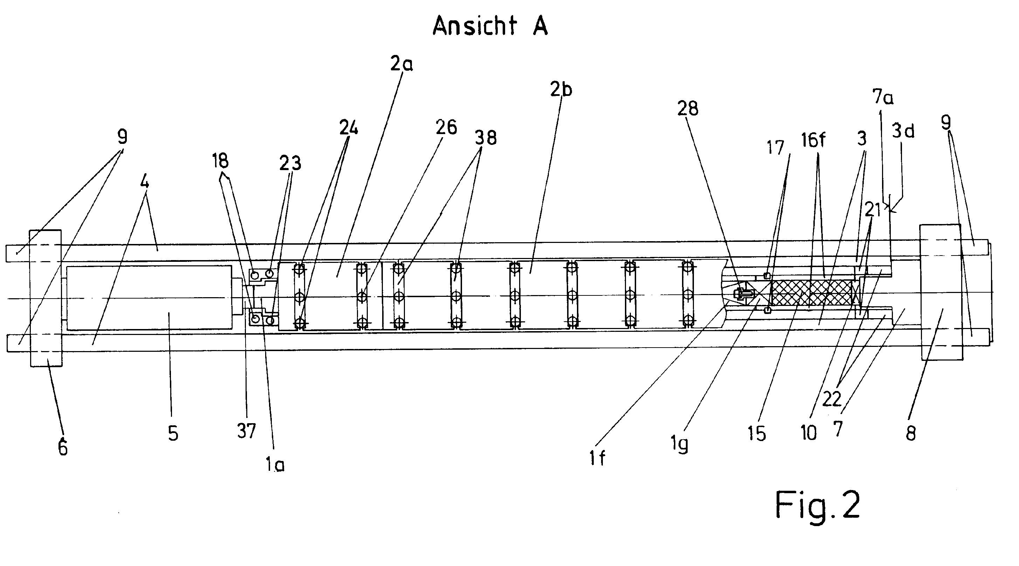

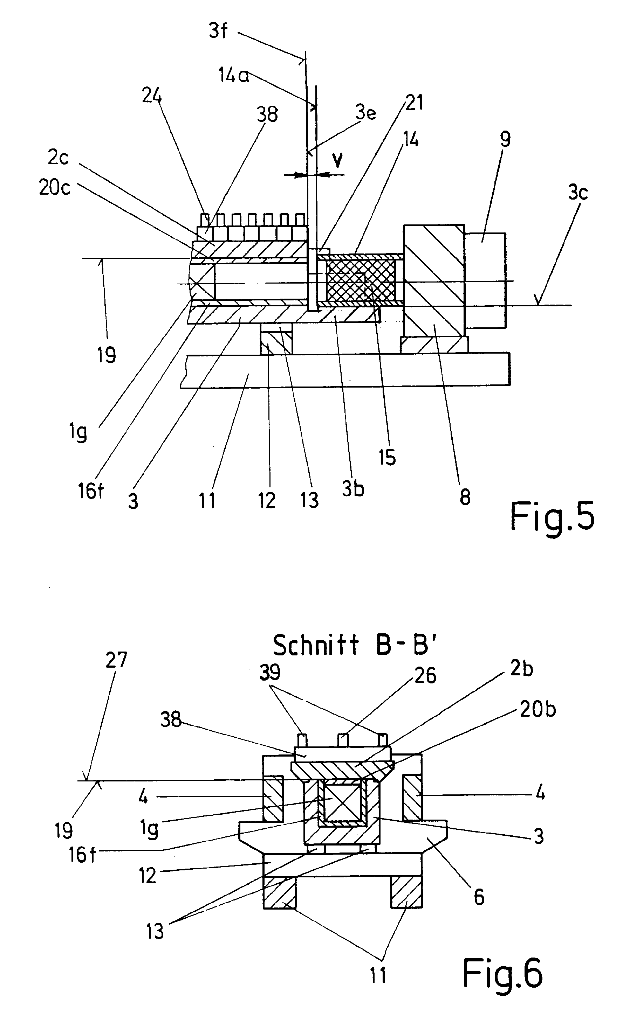

Bei der in Fig. 1 in einem vertikalen Längsschnitt dargestellten Presse liegt der Pressenschacht 3 horizontal und in Preßrichtung längsverschiebbar auf den mit Gleitauflagen 13 versehenen Querstreben 12 des Grundrahmens 11. Am Grundrahmen 11 ist an einem Ende das Joch 6 befestigt, an dem sich mit seinem rückwärtigen Ende der Pressenzylinder 5 abstützt. Am gegenüberliegenden Ende des Grundrahmens liegt das Joch 8 in Preßrichtung beweglich auf. Die Joche 6 und 8 sind durch zwei mit Abstand zu beiden Seiten des Pressenschachtes 3 parallel angeordnete, jeweils an beiden Enden mit Hammerköpfen 9 versehenen Zugankern 4 (in Preßrichtung gesehen) formschlüssig miteinander verbunden (siehe auch Fig. 2 und Fig. 6).

An dem in Preßrichtung liegenden Ende 3b ist der Pressenschacht 3 mit einer waagerechten Auflagefläche 3c versehen, auf der bei den in Fig. 1, Fig. 2 und Fig. 3 dargestellten Betriebsstellungen der Presse der sich mit seiner Rückseite am Joch 8 abstützende Gegenstempel 7 aufliegt.

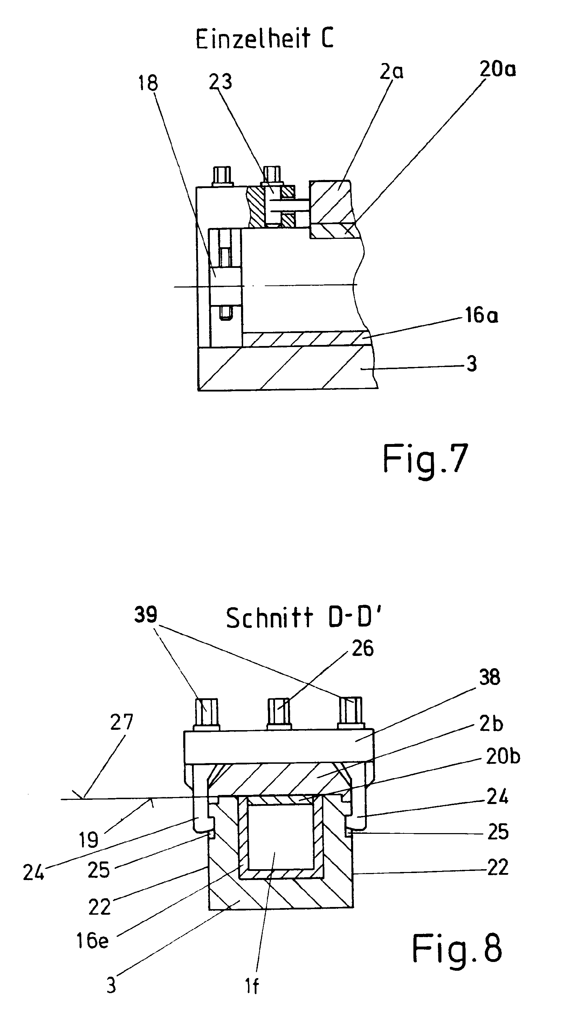

Der Pressenschacht 3 ist im Ausführungsbeispiel innen mit einem auswechselbaren U-förmigen Verschleißeinsatz 16 versehen, der aus Gründen der besseren Entsorgbarkeit in Verschleißeinsatzabschnitte 16a bis 16f unterteilt ist. Der in Preßrichtung liegende letzte Verschleißeinsatzabschnitt ist durch in Nuten eingelegte Anschlagleisten 17 formschlüssig mit dem Pressenschacht 3 verbunden. Mit einem in Preßrichtung wirkenden Verschiebeantrieb 18 (siehe auch Fig. 7), der sich am Pressenschacht 3 abstützt, werden die Verschleißeinsatzabschnitte 16a bis 16f untereinander fugenlos zur Anlage gebracht und der Verschleißeinsatzabschnitt 16 gegen die Anschlagleisten 17 geschoben.

Verschlossen wird der Pressenschacht 3 durch die Deckelabschnitte 2a bis 2c, die an ihren zum Pressenschacht 3 gerichteten Flächen 19 im Ausführungsbeispiel jeweils mit Verschleißplatten 20a bis 20c versehen sind. Die Deckelabschnitte 2a bis 2c werden mit hakenförmigen Deckelschrauben 24 befestigt, die paarweise in Traversen 38 schwenkbar aufgenommen sind und die in Nuten 25 der Seitenwände 22 des Pressenschachts 3 eingreifen. Über die Zentralbetätigung 26 (siehe Fig. 8) und ein nicht näher beschriebenes, innerhalb der Traverse 38 angeordnetes Gestänge werden die Deckelschrauben 24 fernhantiert paarweise in bzw. außer Eingriff geschwenkt und anschließend mit Spannmuttern 39 angezogen. Beim Deckelabschnitt 2c sind im Bereich der Hochverdichtung die Traversen 38 nahe aneinandergerückt, während sie im übrigen Verdichtungsbereich bei den Deckelabschnitten 2a und 2b untereinander größere Abstände aufweisen.

Die Verschleißplatte 20c ist durch die Anschlagleiste 36 formschlüssig am Deckelabschnitt 2c gegen Verschieben in Preßrichtung festgelegt.

Die Deckelabschnitte 2a bis 2c werden vor dem endgültigen Anziehen der hakenförmigen Deckelschrauben 24 durch die an der freien Stirnseite des Deckelabschnitts 2a angreifenden und sich am Pressenschacht 3 abstützenden Verschiebeantriebe 23 untereinander fugenlos zur Anlage gebracht, wobei sich die freie Stirnfläche des Deckelabschnitts 2c an der senkrechten Anlagefläche 3f am Anschlag 21 des Pressenschachtes 3 abstützt.

Der vom Pressenzylinder 5 mittels Kolbenstange 37 betätigte Preßstempel ist unterteilt in mehrere Preßstempelabschnitte 1a bis 1g, von denen der Preßstempelabschnitt 1a (= Zylinderpreßstempel) mit einer Steckverbindung lösbar und nach oben herausnehmbar mit dem freien Ende der Kolbenstange 37 des Pressenzylinders 5 verbunden ist.

Zur unmittelbaren Anlage an dem zu verdichtenden Strukturmaterial dient der Preßstempelabschnitt 1g (= Führungsstempel). Um den vollen Hub des Preßstempels bis zur Erzeugung des hochverdichteten Preßlings 15 zu erreichen, werden zwischen Zylinderstempel 1a und Führungsstempel 1g untereinander gleichlange Verlängerungsstempel 1b bis 1f eingesetzt. Der größte Hub der Kolbenstange 37 des Pressenzylinders 5 ist um ein geringes Maß größer als die Länge eines der Verlängerungsstempel 1b bis 1f. Dadurch ist für das Einlegen jeweils eines Verlängerungsstempels ausreichender Freiraum gewährleistet.

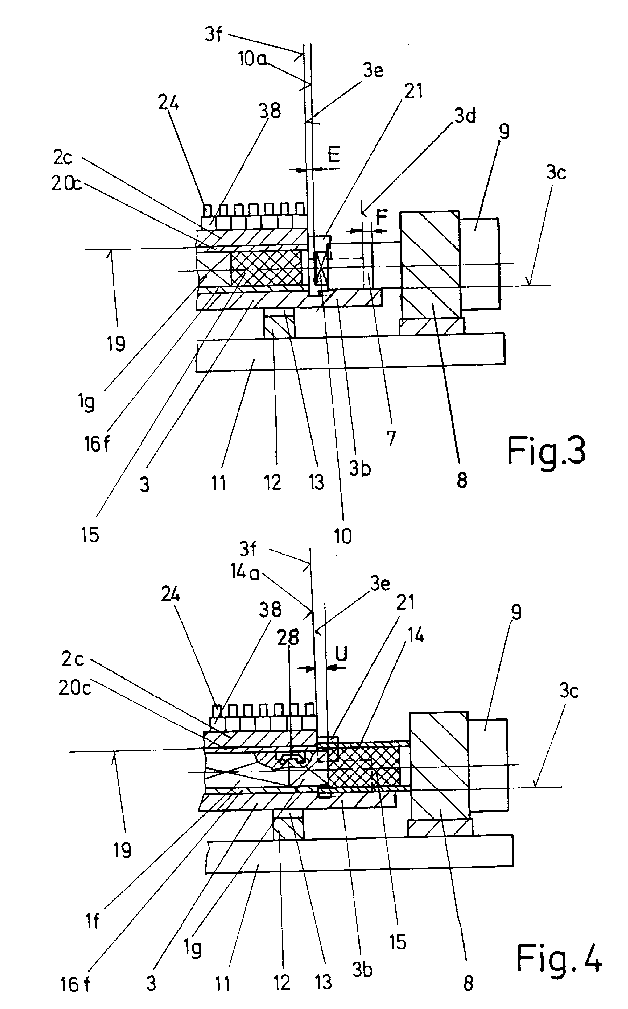

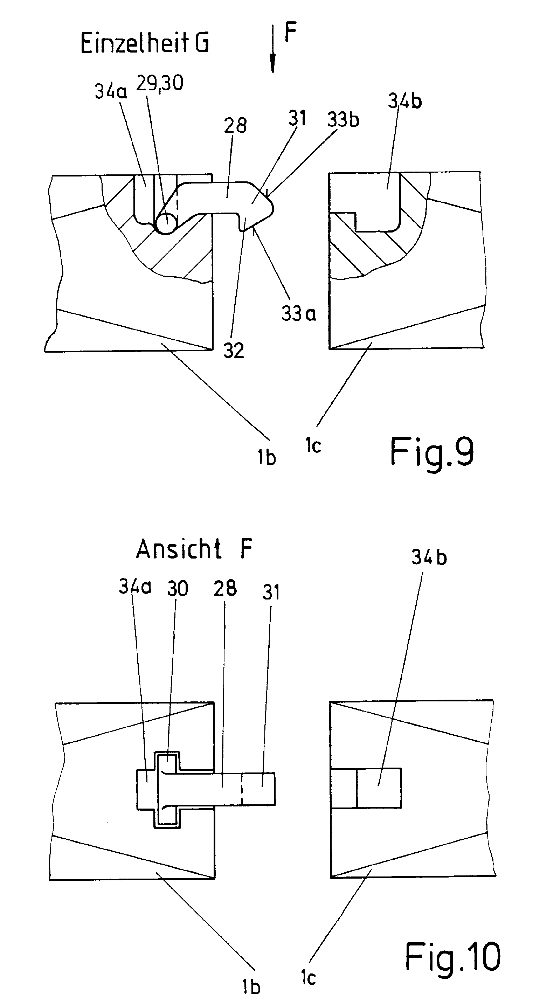

Die Erzeugung eines hochverdichteten Preßlings 15 erfolgt in folgenden Schritten:
a) der leere Pressenschacht 3 wird mit dem Verschiebeantrieb 35, der am Grundrahmen 11 befestigt ist, in seine hintere Endstellung, d. h. in Richtung Joch 6, geschoben;
b) nach dem Auflegen des Gegenstempels 7 auf die waagerechte Auflagefläche 3c wird der Pressenschacht 3 mit dem Verschiebeantrieb 35 in Richtung Joch 8 geschoben bis sich die Endflächen 3d der Seitenwände 22 des Pressenschachts 3 an den seitlich am Gegenstempel 7 befindlichen Anlageflächen 7a anlegen und der Gegenstempel 7 selbst am Joch 8 zur Anlage kommt. In dieser Stellung ragt der Ansatz 10 des Gegenstempels um einen vorgegebenen Weg T in den Verdichtungsraum hinein;
c) durch den Verschiebeantrieb 18 werden die Verschleißeinsatzabschnitte 16a bis 16f untereinander spaltfrei zur Anlage gebracht;
d) der Zylinderstempel 1a und der unmittelbar anliegend Führungsstempel 1g stehen in ihrer Ausgangsstellung;
e) nach dem Einlegen des Brennelementskelettes werden die Deckelabschnitte 2c, 2b und 2a aufgelegt und durch den Verschiebeantrieb 23 untereinander und der Deckelabschnitt 2c an der Anlagefläche 3f am Anschlag 21 des Pressenschachts 3 zur Anlage gebracht. Anschließend werden die in den Traversen 38 schwenkbar gelagerten hakenförmigen Deckelschrauben 24 in Eingriffsstellung geschwenkt und durch Betätigen der Spannmuttern 39 angezogen. Danach wird der Verschiebeantrieb 23 wieder in seine Ausgangsstellung gebracht;
f) nach erfolgtem 1.Hub des Pressenzylinders 5 zum Verdichten des Brennelementskelettes wird die Kolbenstange 37 mit dem daran befestigten Zylinderstempel 1a in die Ausgangslage zurückgezogen. Der Deckel 2a (= Beschickungsdeckel) wird nach dem Lösen der Spannmuttern 39 und dem Ausschwenken der hakenförmigen Deckelschrauben 24 abgehoben;
g) zwischen den am Preßling verbliebenen Führungsstempel 1g und dem Zylinderstempel 1a wird der Verlängerungsstempel 1f gelegt, in dessen obenliegender Aussparung 34a (siehe Fig. 9) sich ein Formstück 28 befindet; beim Vorschieben des Zylinderstempels 1a läuft das Formstück 28 mit seiner unten liegenden schrägen Anlauffläche 33a an der Unterkante der stirnseitigen Öffnung der Aussparung 34b auf, bis der hakenförmige Vorsprung 32 entweder durch Schwerkraft oder durch Anstoßen seiner obenliegenden schrägen Anlauffläche 33b in die Vertiefung der Aussparung 34b fällt.
h) Anschließend erfolgt der 2. Hub und wieder das Zurückziehen des Zylinderstempels 1a in die Ausgangslage; der Deckelabschnitt 2a (= Beschickungsdeckel) kann nach dem 1. Hub abgenommen bleiben;
i) in gleicher Weise werden nacheinander die Verlängerungsstempel 1e, 1d, 1c eingelegt und die jeweiligen Verdichtungshübe ausgeführt;
k) der zuletzt einzusetzende Verlängerungsstempel 1b wird zusätzlich auch am Zylinderstempel 1a mit einem Formstück 28 verbunden, um nach Beendigung des Preßvorgangs und des noch zu beschreibenden Ausschiebens des hochverdichteten Preßlings 15 die durch Formstücke 28 miteinander verbundenen Preßstempelabschnitte 1b bis 1f wieder zurückzuziehen;
l) nach Erreichen des größten Arbeitsdruckes des Pressenzylinders 5 bzw. nach Erreichen eines vorgegebenen Presshubes gilt der Preßvorgang als abgeschlossen; der Pressenzylinder 5 wird hydraulisch entlastet und der Pressenschacht 3 wird durch seinen Verschiebeantrieb 35 in seine Endstellung in Richtung Joch 6 verschoben, wobei der Gegenstempel 7 mit seinem Ansatz 10 a einen Freigang E (siehe Fig. 3) zum Herausheben erhält. Dabei wird der Gegenstempel durch (nicht in der Zeichnung dargestellte) Anschläge am Joch 8 festgehalten;
m) nach dem Herausheben des Gegenstempels 7 wird an dessen Stelle ein Übergabeschacht 14 auf die Auflagefläche 3c gelegt; der Pressenschacht 3 wird über den Verschiebeantrieb 35 soweit in Richtung auf das Joch 8 vorgeschoben bis die in einer Ebene liegenden senkrechten Anlageflächen 3e, 3f des Pressenschachts 3 bzw. des Deckelabschnitts 2c an der unmittelbar gegenüberliegenden Anlagefläche 14a des Übergabeschachtes 14 anliegen und sich anschließend der Übergabeschacht 14 am Joch 8 abstützt;
n) durch weiteres Vorschieben des Preßstempels 1g (Führungsstempel) wird der hochverdichtete Preßling 15 in den Übergabeschacht 14 geschoben, wobei der Führungsstempel 1g um einen vorgegebenen Weg U in den Übergabeschacht 14 eintaucht (siehe Fig. 4);
o) nach dem Zurückziehen des Führungsstempels 1g und dem Zurückschieben des Pressenschachts 3 in Richtung Joch 6 entsteht zum zwangsfreien Herausheben des beladenen Übergabeschachts 14 zwischen dessen Anlageflächen 14a und den pressenschachtseitigen Anlageflächen 3e, 3f ein ausreichender Abstand V (siehe Fig. 5);
p) nach dem Herausheben des mit dem hochverdichteten Preßling 15 beladenen Übergabeschachts 14 erfolgt das Herausnehmen der Verlängerungsstempel 1b bis 1f in umgekehrter Reihenfolge wie das Einlegen, wobei jeweils der Zylinderstempel 1a mittels Formstückes 28 immer an den zunächst anliegenden Verlängerungsstempel angekoppelt wird.

Der Gegenstempel 7, der Übergabeschacht 14, die Preßstempelabschnitte 1a bis 1g, die Deckelabschnitte 2 - 2c, die Traversen 34 mit den darin schwenkbar gelagerten Deckelschrauben 24 sowie die U-förmigen Verschleißeinsätze 16a - 16f sind mit Aufnahmeöffnungen, zur Sicherstellung der Fernhantierbarkeit mit entsprechend gestalteten Hebezeugen, versehen.

## Patentansprüche

1. Presse zum Verdichten von länglichen radioaktiven Strukturteilen, mit einem horizontalliegenden Pressenkanal, bestehend aus einem mit Deckel (2) versehenen Pressenschacht (3), einem durch Hydraulikzylinder (5) angetriebenen Preßstempel (1a - 1g)und einem herausnehmbaren Gegenstempel (7), an dessen Stelle nach erfolgtem Preßvorgang ein Übergabeschacht (14) einlegbar ist, in den der hochverdichtete Preßling (15) durch weiteres Vorschieben des Preßstempels eingeschoben wird, **dadurch gekennzeichnet,** daß die Presse weitgehend aus fernhantierbaren Baugruppen besteht, von denen der Preßstempel in mehrere Preßstempelabschnitte (1a - 1g) und der Deckel in mehrere Deckelabschnitte (2a - 2c) unterteilt sind und der Pressenschacht (3)mittels Verschiebeantrieb (35) längsverschiebbar zwischen parallelen Zugankern (4) angeordnet ist, die ein Joch (6) zum Abstützen des kurzen Pressenzylinders (5) mit einem gegenüberliegenden, den Gegenstempel (7) oder den Übergabeschacht (14) abstützenden Joch (8) verbinden, und der Pressenschacht (3) an seinem in Preßrichtung liegenden Ende (3b) mit einer waagerechten Auflagefläche (3c) für den Gegenstempel (7) bzw. für den Übergabeschacht (14), mit senkrechten Anlageflächen (3d) zur Abstützung der Preßkraft am Gegenstempel (7), mit senkrechten Anlageflächen (3f) der Anschläge (21) am Pressenschacht (3) zur Abstützung des Deckelabschnitts (2c) in Preßrichtung und mit senkrechten Anlageflächen (3e) zur stirnseitigen Anlage am Übergabeschacht (14) versehen ist.

2. Presse nach Anspruch 1, dadurch gekennzeichnet, daß der Pressenschacht (3) innen mit einem auswechselbaren U-förmigen, nach oben offenen Verschleißeinsatz (16) versehen ist.

3. Presse nach Anspruch 2, dadurch gekennzeichnet, daß der U-förmige Verschleißeinsatz (16) des Pressenschachtes (3) aus mehreren in Preßrichtung hintereinander angeordneten Verschleißeinsatzabschnitten (16a - 16f) besteht, von denen der in Preßrichtung letzte Verschleißeinsatzabschnitt (16f) mittels Anschlagleisten (17) formschlüssig mit dem Pressenschacht (3) verbunden ist und der in Preßrichtung erste Verschleißeinsatzabschnitt (16 a) vor einem fernhantierbaren Verschiebantrieb (18) eingesetzt ist, mit dem alle Verschleißeinsatzabschnitte (16a - 16f) untereinander fungenlos und der Verschleißeinsatzabschnitt (16f) gegen die Anschlagleisten (17) am Boden und an den Innenwänden des Pressenschachtes (3) zur Anlage gebracht werden.

4. Presse nach Anspruch 1, dadurch gekennzeichnet, daß die zum Pressenschacht gerichteten Flächen (19) der Deckelabschnitte (2a - 2c) des Deckels (2) mit Verschleißplatten (20a - 20c) versehen sind und der in Preßrichtung letzte Deckelabschnitt (2c) mit der Verschleißplatte (20c) durch eine Anschlagleiste (36) formschlüssig verbunden ist.

5. Presse nach Anspruch 4, dadurch gekennzeichnet, daß der in Preßrichtung erste Abschnitt (2a) des Deckels mit einem fernhantierbaren Verschiebeantrieb (23) verbunden ist, mit dem vor dem Anziehen der Deckelschraube (24) alle Deckelabschnitte (2a - 2c) untereinander fugenlos und der letzte Deckelabschnitt (2c) gegen die Anlagefläche (3e) der Anschläge (21) am Pressenschacht (3) zur Anlage gebracht werden.

6. Presse nach einem der vorangehenden Ansprüche, dadurch gekennzeichnet, daß die Deckelabschnitte (2a - 2c) des Deckels (2) unabhängig voneinander mit paarweise in Traversen (38) schwenkbar befestigten, außen an den Seitenwänden (22) des Pressenschachts (3) in Nuten (25) formschlüssig eingreifenden hakenförmigen Deckelschrauben (24) gegen die Oberseite (27) des Pressenschachtes (3) gespannt werden und die Deckelschrauben (24) fernhantiert paarweise mit der Zentralbetätigung (26) in Eingriffstellung geschwenkt und anschließend mit den Spannmuttern (39) angezogen werden.

7. Presse nach Anspruch 1, dadurch gekennzeichnet, daß zwischen dem an der Kolbenstange (37) des Pressenzylinders (5) lösbar befestigten Zylinderstempel (1a) und dem am zu verdichtenden Material anliegenden Führungsstempel (1g) ein oder mehrere Verlängerungsstempel (1b - 1f) einsetzbar und durch in entsprechende Aussparungen (34a, 34b) einlegbare Formstücke (28) formschlüssig miteinander verbindbar sind.

8. Presse nach Anspruch 7, dadurch gekennzeichnet, daß die Formstücke (28) an ihrem zum Pressenzylinder (5) weisenden Ende (29) beidseitig mit quer zur Preßrichtung liegenden Schwenkzapfen (30) versehen sind und an der Unterseite des gegenüberliegenden in Preßrichtung weisenden Endes (31) einen hakenförmigen Vorsprung (32) aufweisen, der mit einer geneigten Anlauffläche (33a) versehen ist und daß die Formstücke (28) in entsprechende Aussparungen (34a, 34b) an der Oberseite des Zylinderstempels (1a) der Verlängerungsstempel (1b - 1f) und des Führungsstempels (1g) formschlüssig einlegbar sind.

9. Verfahren zum Betrieb der Presse nach Anspruch 1, dadurch gekennzeichnet daß
a) während des Beladevorgangs und während des Preßvorgangs der Pressenschacht (3) in der vorderen Endstellung steht und mit den stirnseitigen senkrechten Anlageflächen (3d) der Pressenschachtseitenwände (22) an der gegenüberliegenden Anlagefläche (7a) des sich mit seiner Rückseite am Joch (8) abstützenden und auf der waagerechten Auflagefläche (3c) aufliegenden Gegenstempels (7) anliegt, wobei in dieser Stellung der Gegenstempel (7) mit seinen in Richtung Pressenschacht (3) weisenden Ansatz (10) in den Innenraum des Pressenschachtes (3) um ein Maß (T) eintaucht und den Pressenquerschnitt nahezu spaltfrei verschließt,
b) nach Beendigung des Preßvorgangs der Pressenschacht (3) in seine hintere Endstellung geschoben wird , wobei zwischen der Stirnfläche (10a) des Ansatzes (10) am Gegenstempel (7) und den senkrechten Anlageflächen (3e) des Pressenschachts (3) ein Spalt (E) und zwischen der Anlagefläche (7a) und (3d) ein Spalt (F) als Freigang zum zwangsfreien Herausheben des Gegenstempels (7) entsteht,
c) nach dem Herausheben des Gegenstempels (7) der Übergabeschacht (14) auf die waagerechte Auflagefläche (3c) gelegt wird und der Pressenschacht (3) soweit in Preßrichtung vorgeschoben, bis die in einer Ebene liegenden senkrechten Anlageflächen (3e) des Pressenschachts (3) und des Deckelabschnitts (2c) an der unmittelbar gegenüberliegenden Anlagefläche (14a) des Übergabeschachtes (14) anliegen und sich anschließend der Übergabeschacht (14) am Joch (8) abstützt,
d) durch Weiterschieben des Führungsstempels (1g) der hochverdichtete Preßling (15) in den Übergabeschacht (14) geschoben wird, wobei der Führungsstempel (1g) um einen vorgegebenen Weg (U) in den Übergabeschacht (14) eintaucht,
e) nach dem Zurückziehen des Führungsstempels (1g) des Pressenschacht (3) wieder in die hintere Endstellung zurückgezogen wird, wobei ein ausreichender Abstand (V) zum zwangsfreien Herausheben des Übergabeschachts (14) entsteht.

## Claims

1. A press for the compaction of elongated radioactive structural parts, with a horizontally disposed pressing channel consisting of a compaction column (3) provided with a cover (2), a press ram (1a - 1g) operated by a hydraulic cylinder (5) and a removable counter-ram (7) in place of which a transfer column (14) can be inserted after completion of the pressing operation, into which transfer column the highly compacted pressed product (15) is inserted by the further advance of the press ram, characterised in that the press substantially consists of remote-handleable subassemblies, of which the press ram is subdivided into a plurality of press ram sections (1a - 1g) and the cover is subdivided into a plurality of cover sections (2a - 2c), and the compaction column (3) is disposed between parallel tie rods (4) so that it is longitudinally displaceable by means of a displacement drive (35), which tie rods connect a yoke (6) for supporting the short press cylinder (5) to an opposite yoke (8) supporting the counter-ram (7) or the transfer column (14), and the compaction column (3) is provided at its end (3b) situated in the direction of pressing with a horizontal support surface (3c) for the counter-ram (7) or for the transfer column (14), with vertical contact faces (3d) for supporting the pressing force at the counter-ram (7), with vertical contact faces (3f) on the stops (21) on the compaction column (3) for supporting the cover section (2c) in the direction of pressing, and with vertical contact faces (3e) for end face contact with the transfer column (14).

2. A press according to claim 1, characterised in that the compaction column (3) is provided inside with a replaceable U-shaped wear insert (16) which is open at the top.

3. A press according to claim 2, characterised in that the U-shaped wear insert (16) of the compaction column (3) consists of a plurality of wear insert sections (16a - 16f) disposed one behind another in the direction of pressing, of which the last wear insert section (16f) in the direction of pressing is attached positively to the compaction column (3) by means of stop strips (17), and the first wear insert section (16a) in the direction of pressing is inserted in front of a remote-handleable displacement drive (18) by means of which all the wear insert sections (16a - 16f) can be brought into contact with each other without a gap and the wear insert section (16f) can be brought into contact with the stop strips (17) on the base and on the inner walls of the compaction column (3).

4. A press according to claim 1, characterised in that the faces (19) of the cover sections (2a - 2c) of the cover (2) which are oriented towards the compaction column are provided with wear plates (20a - 20c), and the last cover section (2c) in the direction of pressing is attached positively to the wear plate (20c) by a stop strip (36).

5. A press according to claim 4, characterised in that the first section (2a) of the cover in the direction of pressing is attached to a remote-handleable displacement drive (23), by means of which, before tightening the cover bolt (24), all the cover sections (2a - 2c) can be brought into contact with each other without a gap and the last cover section (2c) can be brought into contact with the contact face (3e) of the stops (21) on the compaction column (3).

6. A press according to any one of the preceding claims, characterised in that the cover sections (2a - 2c) of the cover (2) are clamped independently of each other against the upper face (27) of the compaction column (3) by means of hook-shaped cover bolts (24), which engage positively in channels (25) on the outside of the sidewalls (22) of the compaction column (3), and which are pivotally fastened in pairs in tie bars (38), and the cover bolts (24) are swivelled in pairs by remote handling into a position of engagement by means of the central control (26) and are subsequently tightened by means of the clamping nuts (39).

7. A press according to claim 1, characterised in that one or more extension rams (1b - 1f) can be inserted between the cylinder ram (1a), which is detachably fastened to the piston rod (37) of the press cylinder (5), and the guide ram (1g) seated against the material to be compacted, and the extension rams can be attached to one another by means of fittings (28) which can be inserted in corresponding recesses (34a, 34b).

8. A press according to claim 7, characterised in that the fittings (28) are provided on both sides at their ends (29) facing the press cylinder (5) with swivel pins (30) situated transverse to the direction of pressing, and have a hook-shaped projection (32) on the underside of their opposite ends (31) facing the direction of pressing, which projection is provided with a sloping lead-in face (33a), and that the fittings (28) can be inserted with positive fit in corresponding recesses (34a, 34b) on the upper face of the cylinder ram (1a) of the extension ram (1b - 1f) and of the guide ram (1g).

9. A method of operating the press according to claim 1, characterised in that
a) during the loading operation and during the pressing operation the compaction column (3) is in its front end position and is seated with the vertical end-face contact faces (3d) of the compaction column sidewalls (22) against the opposite contact face (7a) of the counter-ram (7), which is supported with its back on the yoke (8) and which rests on the horizontal contact face (3c), wherein in this position the projection (10) on the counter-ram (7) which points towards the compaction column (3) enters the interior space of the compaction column (3) by an amount (T) and closes the compaction cross-section almost without a gap,
b) after completion of the pressing operation the compaction column (3) is pushed into its rear end position, wherein a gap (E) is formed between the end face (10a) of the projection (10) on the counter-ram (7) and the vertical contact face (3e) of the compaction column (3), and a gap (F) is formed between contact faces (7a) and (3d) as a free clearance for lifting out the counter-ram (7) without constraint,
c) after lifting out the counter-ram (7) the transfer column (14) is laid on the horizontal contact face (3c) and the compaction column (3) is advanced in the direction of pressing until the vertical contact faces (3e) of the compaction column (3) and of the cover section (2c) are seated against the directly opposite contact face (14a) of the transfer column (14) and the transfer column (14) is subsequently supported on the yoke (8),
d) the highly compacted pressed product (15) is pushed into the transfer column (14) by a further displacement of the guide ram (1g), wherein the guide ram (1g) enters the transfer column (14) by a predetermined distance (U),
e) after withdrawing the guide ram (1g) the compaction column (3) is withdrawn into the rear end position again, wherein sufficient clearance (V) is created for lifting out the transfer column (14) without constraint.

## Revendications

1. Presse pour la compression d'éléments structuraux radioactifs allongés, équipée d'un canal de presse horizontal, se composant d'une enceinte de presse (3) munie d'un couvercle (2), d'un poinçon de presse (1a-1g) actionné par un vérin hydraulique (5) et d'un contre-poinçon extractible (7), à la place duquel, après exécution d'un processus de pressage, peut être introduite une enceinte de transfert (14), dans laquelle l'ébauche (15) fortement comprimée est introduite par un nouvel avancement du poinçon de presse, caractérisée en ce que la presse se compose principalement d'éléments pouvant être télémanipulés, parmi lesquels le poinçon de presse est subdivisé en plusieurs tronçons de poinçon de presse (1a-1g) et le couvercle est subdivisé en plusieurs tronçons de couvercle (2a-2c) et l'enceinte de presse (3) est disposée déplaçable longitudinalement au moyen d'un entraînement (35) entre des tirants parallèles (4), qui relient une culasse (6) en vue du soutien du vérin de presse court (5) à une culasse (8) en vis-à-vis, soutenant le contre-poinçon (7) ou l'enceinte de transfert (14), et l'enceinte de presse (3) à son extrémité (3b) se trouvant dans la direction du pressage est munie d'une surface d'appui horizontale (3c) pour le contre-poinçon (7) ou pour l'enceinte de transfert (14) de surfaces d'appui verticales (3d) en vue de l'application de la force de la presse au contre-poinçon (7), de surfaces d'appui verticales (3f) des butées (21) sur l'enceinte de presse (3) en vue du soutient du tronçon de couvercle (2c) dans la direction de pressage et de surfaces d'appui verticales (3e) en vue de l'application frontale à l'enceinte de transfert (14).

2. Presse selon la revendication 1, caractérisée en ce que l'enceinte de presse (3) est munie intérieurement d'une pièce d'usure (16) ouverte vers le haut, en forme de U, interchangeable.

3. Presse selon la revendication 2, caractérisée en ce que la pièce d'usure (16) en forme de U de l'enceinte de presse (3) se compose de plusieurs tronçons de pièce d'usure (16a-16f) disposés en succession dans la direction du pressage, parmi lesquels le dernier tronçon de pièce d'usure (16f) dans la direction du pressage est relié en correspondance de formes au moyen de butée (17) à l'enceinte de presse (3) et le premier tronçon de pièce d'usure (16a) dans la direction du pressage est introduit avant un entraînement (18) pouvant être télémanipulé, tous les tronçons de pièce d'usure (16a-16f) étant appliqués entre eux sans joints, et le tronçon de pièce d'usure (16f) étant appliqué contre les baguettes de butée (17) sur le fond et sur les parois intérieures de l'enceinte de presse (3).

4. Presse selon la revendication 1, caractérisée en ce que les surfaces (19) dirigées vers l'enceinte de presse des tronçons de couvercle (2a-2c) du couvercle (2) sont munies de plaques d'usure (20a-20c) et le dernier tronçon de couvercle (2c) dans la direction du pressage étant relié en correspondance de formes par une baguette de butée (36) avec la plaque d'usure (20c).

5. Presse selon la revendication 4, caractérisée en ce que le premier tronçon (2a) dans la direction de pressage du couvercle est relié à un entraînement (23) pouvant être télémanipulé, avec lequel avant le serrage des vis de couvercle (24) tous les tronçons de couvercle (2a-2c) sont appliqués les uns aux autres sans joints et le dernier tronçon de couvercle (2c) est appliqué contre la surface d'appui (3e) des butées (21) sur l'enceinte de presse (3).

6. Presse selon l'une quelconque des revendications précédentes, caractérisée en ce que les tronçons de couvercle (2a-2c) du couvercle (2) sont serrés, indépendamment les uns des autres à l'aide de vis de couvercle (24) en forme de crochets, fixées à pivotement par paires dans des traverses (38), pénétrant en correspondance de formes dans des rainures (25) à l'extérieur des parois latérales (22) de l'enceinte de presse (3), contre le côté supérieur (27) de l'enceinte de presse (3) et les vis de couvercle (24) sont amenées par pivotement par paires en position d'engagement par télémanipulation au moyen de la commande centrale (26) et sont ensuite bloquées avec les écrous de serrage (39).

7. Presse selon la revendication 1, caractérisé en ce qu'entre le poinçon de vérin (1a) fixé de façon amovible à la tige de piston (37) du vérin de presse (5) et le poinçon de guidage (1g) adjacent au matériau à comprimer peuvent être introduits un ou plusieurs poinçons de prolongement (1b-1f) qui, grâce à des pièces profilées (28) pouvant être introduites dans des fenêtres appropriées (34a, 34b) peuvent être réunis les uns aux autres en correspondance de formes.

8. Presse selon la revendication 7, caractérisée en ce que les pièces profilées (28) sont munies à leur extrémité (29) tournée vers le vérin de presse (5), des deux côtés, de pivots (30) disposés transversalement à la direction du pressage et présentent sur le côté inférieur de l'extrémité (31) opposée à la direction du pressage, une partie saillante (32) en forme de crochet, qui est munie d'une surface de montée inclinée (33a) et en ce que les pièces profilées (28) peuvent être introduites en correspondance de formes dans les fenêtres correspondantes (34a, 34b) sur le côté supérieur du poinçon du vérin (1a) du poinçon de prolongement (1b-1f) et du poinçon de guidage (1g).

9. Procédé d'utilisation de la presse selon la revendication 1, caractérisé en ce que
a) durant le processus de chargement et durant le processus de pressage, l'enceinte de presse (3) se trouve en position terminale antérieure et s'applique avec les surfaces d'appui verticales frontales (3d) des parois latérales (22) de l'enceinte de presse sur la surface d'appui en vis-à-vis (7a) du contre-poinçon (7) s'appuyant par son côté postérieur sur la culasse (8) et sur la surface d'appui horizontale (3c), de telle sorte que dans cette position, le contre-poinçon (7) avec son prolongement (10) tourné vers l'enceinte de presse (3) pénètre dans l'espace intérieur de l'enceinte de presse (3) d'une distance (T) et ferme pratiquement sans jeu la section transversale de la presse,
b) après achèvement du processus de pressage, l'enceinte de presse (3) est déplacée dans sa position terminale postérieure, de telle sorte qu'entre la surface frontale (10a) du prolongement (10) sur le contre-poinçon (7) et les surfaces d'appui verticales (3e) de l'enceinte de presse (3) apparaît un jeu (E) et entre les surfaces d'appui (7a) et (3d) un jeu (F) en tant que passage libre en vue de l'extraction sans contrainte du contre-poinçon (7),
c) après l'extraction du contre-poinçon (7), l'enceinte de transfert (14) est placée sur la surface d'appui horizontale (3c) et l'enceinte de presse (3) est avancée dans la direction du pressage jusqu'à ce que les surfaces d'appui (3e) verticales, se trouvant dans un plan, de l'enceinte de presse (3) et du tronçon de couvercle (2c) s'appliquent sur la surface d'appui (14a) directement en vis-à-vis de l'enceinte de transfert (14) et l'enceinte de transfert (14) s'appuie ensuite sur la culasse (8),
d) par un nouveau déplacement du poinçon de guidage (1g), l'ébauche pressée fortement comprimée (15) est déplacée dans l'enceinte de transfert (14), de telle sorte que le poinçon de guidage (lg) pénètre d'une distance prédéterminée (U) dans l'enceinte de transfert (14),
e) après le retrait du poinçon de guidage (1g), l'enceinte de presse (3) est à nouveau ramenée dans la position terminale postérieure, de manière à obtenir un écartement suffisant (V) en vue d'une extraction sans contrainte de l'enceinte de transfert (14).
